# EUROPEAN PATENT APPLICATION

(11) **EP 4 386 012 A1**
(43) Date of publication of application: **19.06.2024**
(21) Application number: 23197441.1
(22) Date of filing: 14.09.2023
(51) Int. Cl.: C08B 1/08, C08B 11/12, C08L 1/28, H01M 4/62, H01M 10/0565

(54) **METHOD OF PREPARING LITHIUM SALT OF CARBOXYMETHYL CELLULOSE AND RECHARGEABLE LITHIUM BATTERY COMPRISING LITHIUM SALT OF CARBOXYMETHYL CELLULOSE PREPARED BY SAME**

(30) Priority: 16.12.2022 KR 20220177250
(71) Applicant: Samsung SDI Co., Ltd., Yongin-si, Gyeonggi-do 17084 (KR)
(72) Inventor: Cho, Yunshik, 17084 Yongin-si, Gyeonggi-do (KR); Cho, Minho, 17084 Yongin-si, Gyeonggi-do (KR); Kim, Hana, 17084 Yongin-si, Gyeonggi-do (KR); Lee, Jungmin, 17084 Yongin-si, Gyeonggi-do (KR); Lee, Kukjoo, 17084 Yongin-si, Gyeonggi-do (KR); Jung, Kyunghwa, 17084 Yongin-si, Gyeonggi-do (KR)
(74) Representative: Gulde & Partner

(57) **Abstract**

Disclosed is a method of preparing a lithium salt of carboxymethyl cellulose which includes carrying out alkalization of cellulose and lithium hydroxide to generate an alkali product; and mixing the resulting product with a halogen-including acetic acid or a salt thereof to carry out etherification, wherein amine derivatives is added to at least one of the alkalization and etherification.

## Description

### BACKGROUND OF THE INVENTION

### (a) Field of the Invention

It relates to a method of preparing lithium salt of carboxymethyl cellulose and a rechargeable lithium battery including the lithium salt of carboxymethyl cellulose prepared by the method.

### (b) Description of the Related Art

Recently, the rapid supplement of electronic devices such as mobile phones, laptop computers, and electric vehicles using batteries require surprising increases in demand for rechargeable batteries with relatively high capacity and lighter weight. Particularly, a rechargeable lithium battery has recently drawn attention as a driving power source for portable devices, as it has lighter weight and high energy density. Accordingly, researches for improving performances of rechargeable lithium are actively being conducted.

Carboxymethyl cellulose is one of the representative polymers for increasing viscosity used in rechargeable lithium batteries. Carboxymethyl cellulose is generally used in the form substituted with an alkali salt, and among these, the form substituted with sodium is suitable for the aqueous system, and thus, it is mainly used. However, recently, sodium causes electrochemically side reactions in the battery, and thus, the studies have been actively undertaken to use carboxymethyl cellulose substituted with lithium, instead of sodium.

The lithium salt of carboxymethyl cellulose, however, is uneconomical due to its complicated preparation.

### SUMMARY OF THE INVENTION

The invention is defined by the appended claims. The description that follows is subjected to this limitation. Any disclosure lying outside the scope of said claims is only intended for illustrative as well as comparative purposes.

The invention provides a method of preparing a lithium salt of carboxymethyl cellulose using a simple process, which is capable of giving a high yield.

Another embodiment provides a rechargeable lithium battery including a negative electrode including the lithium salt of carboxymethyl cellulose prepared by the method, a positive electrode, and an electrolyte.

One embodiment provides a method of preparing a lithium salt of carboxymethyl cellulose, including carrying out alkalization of cellulose and lithium hydroxide to prepare an alkali product; and mixing the alkali product with a halogen-including acetic acid or a salt thereof to carry out an etherification, wherein an amine derivative is added to at least one of the alkalization and the etherification.

The amine derivative may be represented by Chemical Formula 1 or Chemical Formula 2.

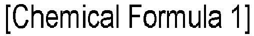

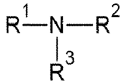

In Chemical Formula 1, R¹, R², and R³ are the same or different, and are hydrogen or an unsubstituted or halogen-substituted C1-C12 alkyl group.

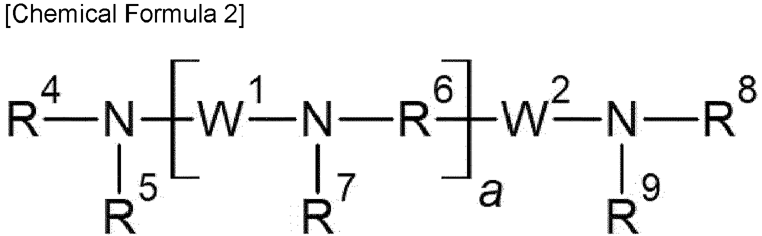

In Chemical Formula 2, R⁴, R⁵, R⁷, R⁸, and R⁹ are the same or different, and are hydrogen or an unsubstituted or halogen-substituted C1-C12 alkyl group,
R⁶ is a C1 -C12 alkenyl group,
W¹ and W² are the same or different and are a C1 to C12 alkenyl group, and
a is an integer of 0 to 2.)

In one embodiment, the amine derivative may be dimethylamine, diethylamine, trimethylamine, triethylamine, chloroalkyl amine, bromoalkyl amine, bis(chloroalkyl)amine, tris(chloroalkyl)amine, ethylene diamine, diethylene triamine, triethylene tetraamine, or combinations thereof.

The halogen-including acetic acid may be chloroacetic acid, fluoroacetic acid, bromoacetic acid, iodineacetic acid, or combinations thereof.

The salt of the halogen-including acetic acid may be a lithium salt of the halogen-including acetic acid.

An added amount of the amine derivative may be 0.0001 parts by weight to 100 parts by weight based on 1 part by weight of the cellulose.

The halogen-including acetic acid or the salt thereof may be added at an amount of 0.1 parts by weight to 100 parts by weight based on 1 part of the cellulose.

The lithium salt of carboxymethyl cellulose may have a degree of substitution of 0.5 or more and 1.5 or less.

The alkalization may be carried out in a solvent. Herein, the solvent may be water, alcohol, or combinations thereof.

Another embodiment provides a rechargeable lithium battery including a negative electrode comprising the lithium salt of carboxymethyl cellulose prepared by the method, a positive electrode, and an electrolyte.

A method of preparing a lithium salt of carboxymethyl cellulose according to one embodiment is simple, and may prepare the lithium salt of carboxymethyl cellulose with a high yield.

### BRIEF DESCRIPTION OF THE DRAWINGS

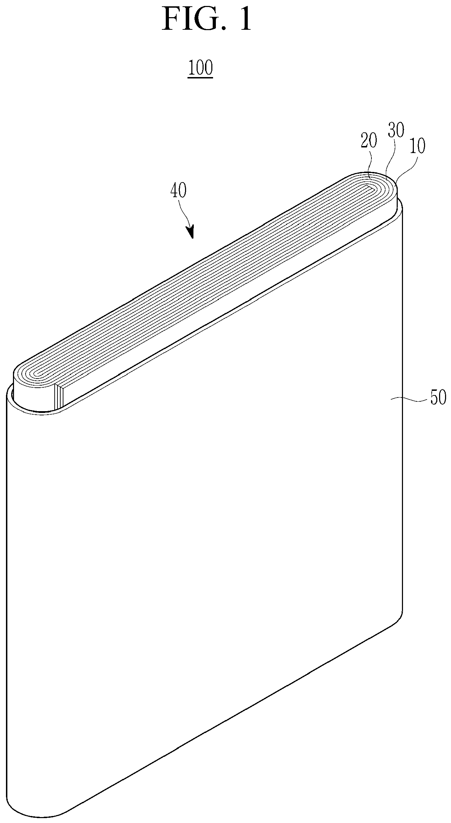

FIG. 1 is a schematic diagram showing a negative electrode for a rechargeable lithium battery according to one embodiment.

### DETAILED DESCRIPTION OF THE INVENTION

Hereinafter, embodiments of the present invention are described in detail. However, these embodiments are merely examples, the present invention is not limited thereto, and the present invention is defined by the scope of claims.

When a definition is not otherwise provided in the specification, an average particle diameter indicates an average particle diameter (D50) where a cumulative volume is 50 volume% in a particle distribution. The average particle diameter (D50) may be measured by a method well known to those skilled in the art, for example, by a particle size analyzer, or by a transmission electron microscopic image, a scanning electron microscopic, or field emission scanning electron microscopy (FE-SEM). Alternatively, a dynamic light-scattering measurement device is used to perform a data analysis, and the number of particles is counted for each particle size range, and from this, the average particle diameter (D50) value may be easily obtained through a calculation.

A method of preparing a lithium salt of carboxymethyl cellulose includes that cellulose and lithium hydroxide are carried out an alkalization to generate an alkali product and then the resulting alkali product is mixed with a halogen-including acetic acid or a salt thereof to carry out an etherification. Herein, an addition of an amine derivative is performed in at least one of the alkalization and the etherification.

Hereinafter, each step will be more illustrated.

First of all, an alkalization of cellulose and lithium hydroxide is performed. This process is performed by mixing cellulose and lithium hydroxide, and the mixing may be performed by physically mixing or by an ultrasonic wave.

The alkalization may be carried out in a solvent. The solvent may be water, alcohol, or combinations thereof. The alcohol may be ethanol, isopropyl alcohol, methanol, butanol, or combinations thereof.

Herein, a used amount of lithium hydroxide may be 0.01 parts by weight to 100 parts by weight, or 0.1 parts by weight to 10 parts by weight based on 1 part by weight of the cellulose. The used amount of lithium hydroxide within the range, renders to readily a reaction of cellulose, thereby generating the lithium salt of carboxymethyl cellulose with higher yield.

Thereafter, the obtained product is mixed with a halogen-including acetic acid or a salt thereof to carry out etherification.

In at least one of the alkalization and the etherification, an amine derivative is added. For example, the alkalization may be performed by mixing cellulose, lithium hydroxide, and the amine derivative, or the etherification may be performed by mixing the product, the halogen-including acetic acid or a salt thereof, and the amine derivative. Also, the amine derivative may be added in both alkalization and etherification.

As such, the use of the amine derivative in the preparation renders to generate the lithium salt of carboxymethyl cellulose.

The alkali salt of carboxymethyl cellulose is generally prepared by distributing cellulose and an alkali hydroxide compound in an alcohol-based solvent such as a mixture of ethanol and water for alkalization, followed by an etherification with a halogen-including acetic acid or a salt thereof. It with sodium salt as the alkali salt is easily prepared by the above method, but when the alkali salt is lithium salt, it is difficult to prepare by the above method, as lithium hydroxide has low solubility in the alcohol-based solvent, and thus it does not activate cellulose, thereby causing no etherification. Thus, the conventional preparation of the lithium salt of carboxymethyl cellulose is performed by preparing the sodium salt of carboxymethyl cellulose, treating it with an acid and then reacting it with lithium hydroxide.

On the other hand, the preparation according to the invention uses the amine derivative to omit the preparation of sodium of carboxymethyl cellulose, and directly prepare the lithium salt of carboxymethyl cellulose. This is because even if lithium hydroxide has low in the alcohol-based solvent, the amine derivative may act as a catalyst for etherification, allowing the etherification of unactivated cellulose to readily occur regardless whether the amine derivative is used in any stage of the alkalization or the etherification.

In one embodiment, the amine derivative may be represented by Chemical Formula 1 or Chemical Formula 2.

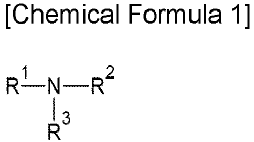

In Chemical Formula 1, R¹, R², and R³ are the same or different, and are hydrogen or an unsubstituted or halogen-substituted C1-C12 alkyl group.

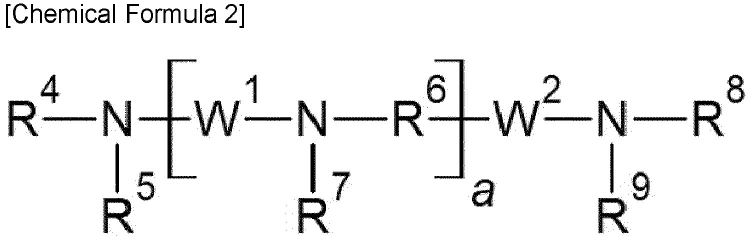

In Chemical Formula 2, R⁴, R⁵, R⁷, R⁸, and R⁹ are the same or different, and are hydrogen or an unsubstituted or halogen-substituted C1-C12 alkyl group, R⁶ is a C1-C12 alkenyl group, W¹ and W² are the same or different and are a C1 to C12 alkenyl group, and a is an integer of 0 to 2.

In Chemical Formula 1 or Chemical Formula 2, the alkyl may be a linear, branched, or cyclic form. In one embodiment, at least one of R¹ to R⁹ may be a C1 to C12 alkyl group, and in another embodiment, all R¹ to R⁹ may be a C1 to C12 alkyl group. If at least one of R¹ to R⁹ is a C1 to C12 alkyl group, it may have suitable basicity for preparing a lithium salt of carboxymethyl cellulose, so that the side reaction in the reaction may be effectively suppressed.

In one embodiment, the alkyl group may be a C1 to C4 alkyl group.

The amine derivative according to one embodiment may be dimethylamine, diethylamine, trimethylamine, triethylamine, chloroalkyl amine, bromoalkyl amine, bis(chloroalkyl)amine, tris(chloroalkyl)amine, ethylene diamine, diethylene triamine, triethylene tetraamine, or combinations thereof. In chloroalkyl amine, bromoalkyl amine, bis(chloroalkyl)amine and tris(chloroalkyl)amine, the alkyl may be methyl, ethyl, propyl or butyl.

In one embodiment, an added amount of the amine derivative may be 0.0001 parts by weight to 100 parts by weight, or 0.001 parts by weight to 10 parts by weight based on 1 part by weight of the cellulose. When the added amount of the amine derivative is satisfied in the range, the lithium salt of carboxymethyl cellulose with a suitable degree of lithium substitution for the battery, may be prepared. If the amine derivative is used in an amount of less than 0.0001 parts by weight based on 1 part by weight of the cellulose, the lithium salt of carboxymethyl cellulose may not be effectively prepared.

The halogen-including acetic acid used in the etherification may be chloroacetic acid, fluoroacetic acid, bromoacetic acid, or iodineacetic acid. Furthermore, the halogen-including acetic acid may be a lithium salt thereof.

An amount of the halogen-including acetic acid or a salt thereof may be 0.1 parts by weight to 100 parts by weight, or 1 part by weight to 20 parts by weight based on 1 part by weight of the cellulose. When the halogen-including acetic acid or the salt thereof is within the range, the lithium salt of carboxymethyl cellulose with a suitable degree of lithium substitution for the battery, may be prepared.

The degree of lithium substitution refers to a degree of substitution described below.

The degree of substitution (DS) of the lithium salt of carboxymethyl cellulose prepared by the method of one embodiment may be 0.5 or more, and 1.5 or less, or 0.7 to 1.3. The degree of substitution refers to an average number of a substituent group per repeating unit of cellulose that are substituted in cellulose. Thus, the lithium salt of carboxymethyl cellulose according to one embodiment may have three or less CH₂COOLi per the repeating unit of cellulose, i.e., one unit, and may have an average number of 0.5 or more, and 1.5 or less.

The lithium salt of carboxymethyl cellulose may have a weight-average molecular weight (Mw) of 10,000 g/mol to 10,000,000 g/mol, or 100,000 g/mol to 3,000,000 g/mol. When the weight-average molecular weight (Mw) of the lithium salt carboxymethyl cellulose is within the range, a slurry-type composition with a suitable viscosity for the negative electrode preparation may be prepared, and thus, the processability may be improved.

In addition, a viscosity of the lithium salt of carboxymethyl cellulose may be 100 mPas or more, and 5000 mPas or less in a 1 wt% aqueous solution. The viscosity is the value obtained at a room temperature of 20 °C to 25 °C.

Such a lithium salt of carboxymethyl cellulose may be appropriately used in the rechargeable lithium battery, and may be particularly, appropriately used as a thickener or a binder.

The negative electrode includes a negative active material layer and a current collector supporting the negative active material layer.

The lithium salt of carboxymethyl cellulose according to one embodiment may be included in the negative active material layer. Herein, the amount of lithium salt of carboxymethyl cellulose may be 0.5 wt% or more, and less than about 3 wt% based on the total, 100 wt% of the negative active material layer.

The negative active material layer may include a negative active material and a binder, and may further include a conductive material.

The negative active material includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be a carbon material, and for example, crystalline carbon, amorphous carbon, or a combination thereof. The crystalline carbon may be unspecified shaped, sheet, flake, spherical, or fiber shaped natural graphite or artificial graphite, and the amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a silicon-based material, or a Sn-based negative active material. The Si-based negative active material may be silicon, a Si-C composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative active material may include Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), or and at least one of these materials may be mixed with SiO₂. The element Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

In one embodiment, the Si-C composite may include silicon particles and an amorphous carbon coated on the surface of the silicon particles. For example, the silicon-carbon composite may include a secondary particle in which silicon primary particles are agglomerated and an amorphous carbon coating layer positioned on the surface of the secondary particle. The amorphous carbon is positioned between the silicon primary particles, for example, allowing the silicon primary particles to be coated with amorphous carbon. In addition, the silicon-carbon composite may include a core in which silicon particles are distributed in an amorphous carbon matrix and an amorphous carbon coating layer coated on a surface of the core.

The secondary particles are positioned at the center of the Si-C composite, and thus, it may be referred to as a core or a central part.

Furthermore, the amorphous carbon coating layer may be referred to as an outer part or a shell.

The silicon particles may be nano silicon particles. The nano silicon particles may have a particle diameter of about 10 nm to about 1,000 nm, according to one embodiment, of about 20 nm to about 900 nm, about 20 nm to about 800 nm, about 20 nm to about 500 nm, about 20 nm to about 300 nm, or about 20 nm to about 150 nm. When the average particle diameter of the Si particle is within the range, the excessive volume expansion caused during charge and discharge may be suppressed, and a breakage of the conductive path due to crushing of particle during charge and discharge may be prevented.

Herein, a mixing ratio of the nano silicon and amorphous carbon may be about 1:99 to about 60:40 weight ratio.

In one embodiment, the secondary particle or the core may further include crystalline carbon. Alternatively, when the silicon-carbon composite further includes the crystalline carbon, the Si-C composite may include a secondary particle in which the silicon primary particles and the crystalline carbon are agglomerated, and an amorphous carbon coating layer positioned on the surface of the secondary particle.

Furthermore, when the Si-C includes the silicon particle, the crystalline carbon and the amorphous carbon, an amount of the amorphous carbon may be about 30 wt% to 70 wt% based on the total 100 wt% of the Si-C composite, and an amount of the crystalline carbon may be about 1 wt% to about 20 wt% based on the total 100 wt%, of the Si-C composite. In addition, an amount of the silicon particles may be about 20 wt% to about 70 wt% based on the total 100 wt% of the Si-C composite, or according to one embodiment, about 30 wt% to about 60 wt% based on the total 100 wt% of the Si-C composite.

The particle diameter of the Si-C composite may be appropriately controlled, and there is no need to specifically limit it.

When the amorphous carbon is positioned by surrounding the surface of the secondary particles surface, a thickness thereof may be suitably controlled, but, for example, may be about 5 nm to about 100 nm.

In one embodiment, the Si-C composite may be included as a first negative active material and a crystalline carbon may be included as a second negative active material. Herein, a mixing ratio of the first negative active material and the second negative active material may be about 1:99 to about 50:50 by weight ratio. More specifically, the negative active material may also include the first negative active material and the second negative active material at a weight ratio of about 5:95 to about 20:80.

The binder improves binding properties of negative active material particles with one another and with a current collector. The binder may be an aqueous binder.

The aqueous binder may be a styrene-butadiene rubber, an acrylated styrene-butadiene rubber (ABR), an acrylonitril-butadiene rubber, an acryl rubber, a butyl rubber, a fluorine rubber, an ethylene oxide containing polymer, polyvinyl pyrrolidone, polypropylene, polyepichlorohydrine, polyphosphazene, an ethylene propylenediene copolymer, polyvinylpyridine, chlorosulfonated polyethylene, latex, a polyester resin, an acryl resin, a phenol resin, an epoxy resin, polyvinyl alcohol, or combinations thereof.

An amount of the aqueous binder may be about 0.5 wt% or more and less than about 3 wt% based on the total 100 wt% of the negative active material layer. According to one embodiment, the total amount of the lithium salt of carboxymethyl cellulose and the aqueous binder may be about 1 wt% to about 3 wt% based on the total, 100 wt% of the negative active material layer.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to one embodiment includes the negative electrode, a positive electrode, and an electrolyte.

The positive electrode includes a current collector and a positive active material layer formed on the current collector.

The positive active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D¹₂ (0.90≤a≤1.8, 0≤b≤ 0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiaE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D' is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; J is selected from V, Cr, Mn, Co, Ni, Cu, and a combination thereof; L¹ is selected from Mn, Al and combinations thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amount of the binder and the conductive material may be about 1 wt% to about 5 wt%, respectively based on the total amount of the positive active material layer.

The binder improves binding properties of positive electrode active material particles with one another and with a current collector. The examples of the binder may be polyvinyl alcohol, carboxymethyl cellulose, hydroxypropyl cellulose, diacetylcellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene- butadiene rubber, an epoxy resin, nylon, and the like, but is not limited thereto.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, carbon fiber, and the like; a metal-based material of a metal powder or a metal fiber including copper, nickel, aluminum, silver, and the like; a conductive polymer such as a polyphenylene derivative; or a mixture thereof.

The current collector may be Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. Furthermore, the ketone-based solvent may be cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance, and it is well known in one of ordinary skilled in the art.

Furthermore, the carbonate-based solvent may desirably use a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

The non-aqueous organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula.

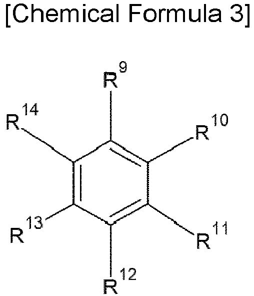

In Chemical Formula 3, R⁹ to R¹⁴ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, or an ethylene carbonate-based compound represented by Chemical Formula 4, as an additive for improving cycle life.

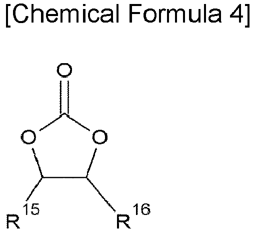

In Chemical Formula 4, R¹⁵ and R¹⁶ are the same or different and may be each independently hydrogen, a halogen, a cyano group (CN), a nitro group (NO₂), or a C1 to C5 fluoroalkyl group, provided that at least one of the of R¹⁵ and R¹⁶ is a halogen, a cyano group (CN), a nitro group (NO₂), or a C1 to C5 fluoroalkyl group, and R¹⁵ and R¹⁶ are not simultaneously hydrogen.)

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate or fluoroethylene carbonate, and the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(CyF_{2y+1}SO2), where x and y are natural numbers, for example, an integer of about 1 to about 20, lithium difluoro(bisoxolato) phosphate), LiCl, Lil, LiB(C₂O₄)₂ (lithium bis(oxalato) borate: LiBOB) and lithium difluoro(oxalato)borate (LiDFOB). A concentration of the lithium salt may range from about 0.1 M to about 2.0. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. Examples of a suitable separator material may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is an exploded perspective view of a rechargeable lithium battery according to one embodiment. The rechargeable lithium battery according to an embodiment is illustrated as a prismatic battery but is not limited thereto, and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present invention and comparative examples are described. These examples are not in any sense to be interpreted as limiting the scope of the invention.

### (Example 1)

Cellulose was mixed with lithium hydroxide in a water solvent using a mechanical stirrer to carry out an alkalization, thereby preparing an alkali product.

To the alkali product, chloroacetic acid and triethylamine were added to carry out etherification.

In the process, a weight ratio of cellulose, chloroacetic acid, and triethylamine was set to be 1:1:5. A used amount of lithium hydroxide was 5 parts by weight based on 1 part by weight of cellulose.

According to the process, a lithium salt of carboxymethyl cellulose with a degree of substitution of 0.5 was prepared (yield: 98%). An aqueous solution having 1 wt% of the prepared product had a viscosity (at 25 °C) of 5000 mPas, and the lithium salt of carboxymethyl cellulose had a weight-average molecular weight (Mw) of 100,000 g/mol to 1,000,000 g/mol.

### (Example 2)

A lithium salt of carboxymethyl cellulose with a degree of substitution of 0.9 was prepared (yield: 98%) by the same procedure as in Example 1, except that the weight ratio of cellulose, chloroacetic acid, and triethylamine was changed to 1:2:5.

An aqueous solution having 1 wt% of the prepared product had a viscosity (at 25 °C) of 3000 mPas, and the lithium salt of carboxymethyl cellulose had a weight-average molecular weight (Mw) of 100,000 g/mol to 1,000,000 g/mol.

### (Example 3)

A lithium salt of carboxymethyl cellulose with a degree of substitution of 1.2 was prepared (yield: 94%) by the same procedure as in Example 1, except that the weight ratio of cellulose, chloroacetic acid, and triethylamine was changed to 1:5:5.

An aqueous solution having 1 wt% of the prepared product had a viscosity (at 25 °C) of 1500 mPas, and the lithium salt of carboxymethyl cellulose had a weight-average molecular weight (Mw) of 100,000 g/mol to 1,000,000 g/mol.

### (Example 4)

A lithium salt of carboxymethyl cellulose with a degree of substitution of 1.5 was prepared (yield: 91%) by the same procedure as in Example 1, except that the weight ratio of cellulose, chloroacetic acid, and triethylamine was changed to 1:5:10.

An aqueous solution having 1 wt% of the prepared product had a viscosity (at 25 °C) of 100 mPas, and the lithium salt of carboxymethyl cellulose had a weight-average molecular weight (Mw) of 100,000 g/mol to 1,000,000 g/mol.

### (Comparative Example 1)

Cellulose was mixed with lithium hydroxide in a water solvent using a mechanical stirrer to carry out an alkalization, thereby preparing an alkali product.

To the alkali product, chloroacetic acid was added to carry out etherification, thereby preparing a lithium salt of carboxymethyl cellulose with a degree of substitution of 0.4 (yield: 5%).

In the process, a weight ratio of cellulose and chloroacetic acid was set to be 1:10. The prepared lithium salt of carboxymethyl cellulose had too low solubility in water and the viscosity therefor was unable measured.

### Experimental Example 1) Measurement of a degree of substitution

For the lithium salt of carboxymethyl cellulose according to Examples 1 to 4 and Comparative Example 1, the degree of lithium substitution was measured via an ICP (Inductively-coupled plasma) analysis. The results are shown in Table 1.

### Experimental Example 2) Measurement of amount of lithium

The amount of lithium included in the lithium salt of carboxymethyl cellulose according to Examples 1 to 4 and Comparative Example 1 was measured via an ICP analysis. The results are shown in Table 1.

The weight ratio of cellulose, chloroacetic acid (CA), and triethylamine (TEA), yield, and viscosity according to Examples 1 to 4 and Comparative Example 1 are also summarized in Table 1.

**Table 1**

| | Cellulose/CA/T EA(weight ratio) | Degree of substitut ion | Amount of Li (mass%) | Yield (%) | Viscosity of 1 wt% an aqueous solution (mPas) |
|---|---|---|---|---|---|
| Example 1 | 1/1/5 | 0.5 | 1.78 | 98 | 5000 |
| Example 2 | 1/2/5 | 0.9 | 2.83 | 98 | 3000 |
| Example 3 | 1/5/5 | 1.2 | 3.47 | 94 | 1500 |
| Example 4 | 1/5/10 | 1.5 | 4.02 | 91 | 100 |
| Comparative Example 1 | 1/10/0 | 0.4 | 1.48 | 5 | Not measurable |

As shown in Table 1, Examples 1 to 4 in which lithium salts of carboxymethyl cellulose were prepared using the amine derivative, prepared the lithium salts of carboxymethyl cellulose having the suitable degree of substitution with a high yield. On the other hand, Comparative Example 1 without the amine derivative prepared carboxymethyl cellulose having a low degree of substitution at an extremely low yield.

## Claims

1. A method of preparing a lithium salt of carboxymethyl cellulose, comprising:
carrying out alkalization of cellulose and lithium hydroxide; and
mixing the resulting product with a halogen-including acetic acid or a salt thereof to carry out etherification,
wherein an amine derivative is added to at least one of the alkalization and etherification.

2. The method of preparing a lithium salt of carboxymethyl cellulose of claim 1, wherein the amine derivative is represented by Chemical Formula 1 or Chemical Formula 2. 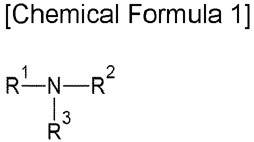 wherein in Chemical Formula 1, R¹, R², and R³ are the same or different, and are hydrogen or an unsubstituted or halogen-substituted C1-C12 alkyl group, 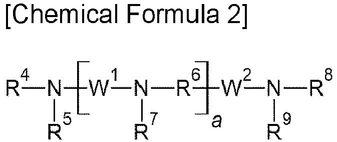 wherein in Chemical Formula 2, R⁴, R⁵, R⁷, R⁸, and R⁹ are the same or different, and are hydrogen or an unsubstituted or halogen-substituted C1-C12 alkyl group,
R⁶ is a C1-C12 alkenyl group,
W¹ and W² are the same or different and are a C1 to C12 alkenyl group, and
a is an integer of 0 to 2.

3. The method of preparing a lithium salt of carboxymethyl cellulose of claim 1, wherein the amine derivative is dimethylamine, diethylamine, trimethylamine, triethylamine, chloroalkyl amine, bromoalkyl amine, bis(chloroalkyl)amine, tris(chloroalkyl)amine, ethylene diamine, diethylene triamine, triethylene tetraamine, or combinations thereof.

4. The method of preparing a lithium salt of carboxymethyl cellulose of any one of the preceding claims, wherein the halogen-including acetic acid is chloroacetic acid, fluoroacetic acid, bromoacetic acid, iodineacetic acid, or combinations thereof.

5. The method of preparing a lithium salt of carboxymethyl cellulose of any one of the preceding claims, wherein the salt of the halogen-including acetic acid is a lithium salt of a halogen-including acetic acid.

6. The method of preparing a lithium salt of carboxymethyl cellulose of any one of the preceding claims, wherein an added amount of the amine derivatives is 0.0001 parts by weight to 100 parts by weight based on 1 part by weight of the cellulose.

7. The method of preparing a lithium salt of carboxymethyl cellulose of any one of the preceding claims, wherein the halogen-including acetic acid or the salt thereof is added at an amount of 0.1 parts by weight to 100 parts by weight based on 1 part of the cellulose.

8. The method of preparing a lithium salt of carboxymethyl cellulose of any one of the preceding claims, wherein the lithium salt of carboxymethyl cellulose has a degree of substitution of 0.5 or more and 1.5 or less.

9. The method of preparing a lithium salt of carboxymethyl cellulose of any one of the preceding claims, wherein the alkalization is carried out in a solvent.

10. The method of preparing a lithium salt of carboxymethyl cellulose of claim 9, wherein the solvent is water, alcohol, or combinations thereof.

11. A rechargeable lithium battery, comprising:
a negative electrode comprising the lithium salt of carboxymethyl cellulose prepared by the method of any one of claim 1 to claim 10;
a positive electrode; and
an electrolyte.
